Europäisches Patentamt

European Patent Office

Office européen des brevets

(19)

(11) Publication number: **0 275 812 B1**

## EUROPEAN PATENT SPECIFICATION

(12)

(45) Date of publication of patent specification: **04.12.91**

(51) Int. Cl.⁵: **D01G 37/00, B65B 63/08, B30B 9/30, A01F 15/00**

(21) Application number: **87630275.3**

(22) Date of filing: **23.12.87**

(54) Conditioning of baled materials.

(30) Priority: **23.12.86 AU 9693/86**

(43) Date of publication of application:
**27.07.88 Bulletin 88/30**

(45) Publication of the grant of the patent:
**04.12.91 Bulletin 91/49**

(84) Designated Contracting States:
**BE CH DE FR GB IT LI NL SE**

(56) References cited:
**EP-A- 0 191 713**
**US-A- 3 881 222**
**US-A- 4 548 131**

(73) Proprietor: **AUSTRALIAN WOOL CORPORA-TION**
**369 Royal Parade**
**Parkville Victoria 3052(AU)**

(72) Inventor: **Roder, Edward Alexander**
**396 Pound Road**
**Narre Warren Victoria 3805(AU)**
Inventor: **Napper, Gregory John**
**9 Casale Court**
**Frankston Victoria 3199(AU)**

(74) Representative: **Schmitz, Jean-Marie et al**
**OFFICE DENNEMEYER S.à.r.l. P.O. Box 1502**
**L-1015 Luxembourg(LU)**

EP 0 275 812 B1

**Description**

This invention relates to a method and apparatus for conditioning baled materials such as wool and other fibrous materials. The invention is more particularly concerned with improvements in or modifications of the method and apparatus described in EP-A-0191713.

When wool is transported in bales to countries having cold climates, the wool is often frozen for considerable periods of the year. Similarly, when baled and dumped wool is placed in long term storage, the fibre develops a set. the extent to which depends on the factors of time, temperature, density and moisture content. It will be appreciated that baled wool which has a high set factor caused by low temperatures and/or long term storage is extremely difficult to open for further processing and the wool must dwell for considerable periods of time until the set in the wool eventually releases.

While it is known, for example from U.S. Patent 233288 Seeland and Russian Patent 166598, to inject steam into frozen bales through a probe which penetrates the bale to speed the thawing process, thawing does not take place uniformly and difficulties are often experienced in obtaining adequate penetration of the probe due not only to the frozen State of the fibres but also to the high density of the fibres in the bale. Accordingly, the injection of steam in this manner is not a satisfactory solution to the problem of frozen bales and similarly does not provide a solution to the problem of opening high density long term storage bales.

In our earlier patent application EP-A-0191713 referred to above we have described a bale conditioning apparatus and method which constituted a significant improvement on the previously used conditioning methods, including the injection of Steam as described above and the placing of bales in a warming room. However, further experimentation revealed that the forcing of a mixture of steam and moisture laden heated air into the bales still resulted in bale residence times which were unacceptably long, that is, in excess of 20 minutes. It was found that the steam and moisture laden heated air mixture built up in the bale and prevented further penetration of heat through the bale. The maximum allowable pressure (of the order of 120 kPa) was found to be insufficient to cause adequate penetration of the required heat front through the bale in an acceptable period of time. Any increase in the pressure of course resulted in an increase in temperature and, as has been found in the case of prior art steam injection methods, this often results in localized yellowing and other damage to the wool fibres contained in the bale.

The method and apparatus of the present invention are defined according to the characterizing portions of claims 1 and 6, respectively.

It is accordingly the object of the present invention to provide a method and apparatus for conditioning baled materials in which the above problem is at least substantially ameliorated.

In a first aspect of the present invention, there is provided a method of conditioning baled materials comprising the steps of:

1. forcing dry steam under low pressure into the bale to be conditioned for a short period of time over a substantial part of the surface area of at least two sides of the bale so that said steam penetrates the material in the bale in a relatively uniform manner, and

2. forcing moisture laden heated air under substantially higher pressures into the bale for a longer period of time over a substantial part of the surface area of at least two sides of the bale to reduce the temperature of the steam in the bale and to substantially uniformly distribute the heat built up in the bale throughout the bale.

In another aspect, the invention provides an apparatus for conditioning baled material comprising at least two plenum pads each dimension to cover a substantial part of the surface area of a side of a bale to be treated, means for clamping said pads in sealing contact with at least two opposite sides of the surface of said bale, means for forcing steam and moisture laden heated air under pressure into said bale via said plenum pads whereby said steam/air penetrates the material in said bale in a relatively uniform manner, and means for controlling the introduction of said steam/air in two discrete steps:

1. forcing dry steam under low pressure into the bale to be conditioned for a short period of time over a substantial part of the surface area of at least two sides of the bale so that said steam penetrates the material in the bale in a relatively uniform manner, and

2. forcing moisture laden heated air under substantially higher pressures into the bale for a longer period of time over a substantial part of the surface area of at least two sides of the bale to reduce the temperature of the steam in the bale and to substantially uniformly distribute the heat built up in the bale throughout the bale.

In one preferred form of the above defined aspects of the invention, saturated dry steam is first forced into the bale at a low pressure of from about 40kPa to about 55kPa at a temperature of from 80°C to about 120°C for a period of about 140 to 240 seconds and in the second step, saturated compressed air is forced into the bale at pressures in the approximate range 100 to 300kPa at temperatures in the region of 50 to 70°C for a total period of the order of four to eight minutes.

In a particularly preferred form of the invention, steps 1 and 2 defined above are preferably repeated at least once to provide the total treatment time periods defined above, in other words, steps 1 and 2 are initially performed for half of the total period defined above and are then subsequently performed for the remainder of that period. This reduces the heat stock to the fibres contained in the bale, which is particularly important if the fibres are wool. It will of course be appreciated that the time periods referred to above are relatively arbitrary and are dictated by the density of the bale to be conditioned. Obviously if the bale is not particularly dense, the time period may be significantly reduced. The time periods indicated above are for bales having a density of the order of 700kg/m³.

At the present stage of development, a plenum pad clamping force of the order of 25 to 35 tonnes is sufficient to cause adequate sealing of the plenum pads in contact with the surface of the bale whereby substantially uniform penetration of the air/steam into the material in the bale is achieved.

In a particularly preferred form of the invention, plenum pads are clamped to two opposed side surfaces of a bale and steam and moisture laden air are caused to penetrate the fibres in the bale under the conditions outlined above. Experiments have shown that under these conditions the temperature of a bale having a fibre density of the order of 700 kg/m may be elevated from minus 20°C to 65°C in approximately nine minutes. Similarly, other experiments have shown that long term storage bales which have previously been extremely difficult to open may be opened with relative ease after treatment according to the invention for a period of time of the order of that indicated above under the conditions indicated above.

One presently preferred embodiment of the invention is shown schematically in the accompanying drawings, in which:

Fig. 1 is a front elevation of an apparatus embodying the invention;

Fig. 2 is a side elevation of the apparatus of Fig. 1; and

Fig. 3 shows the construction of one of the plenum pads used in the apparatus of Figs. 1 to 2.

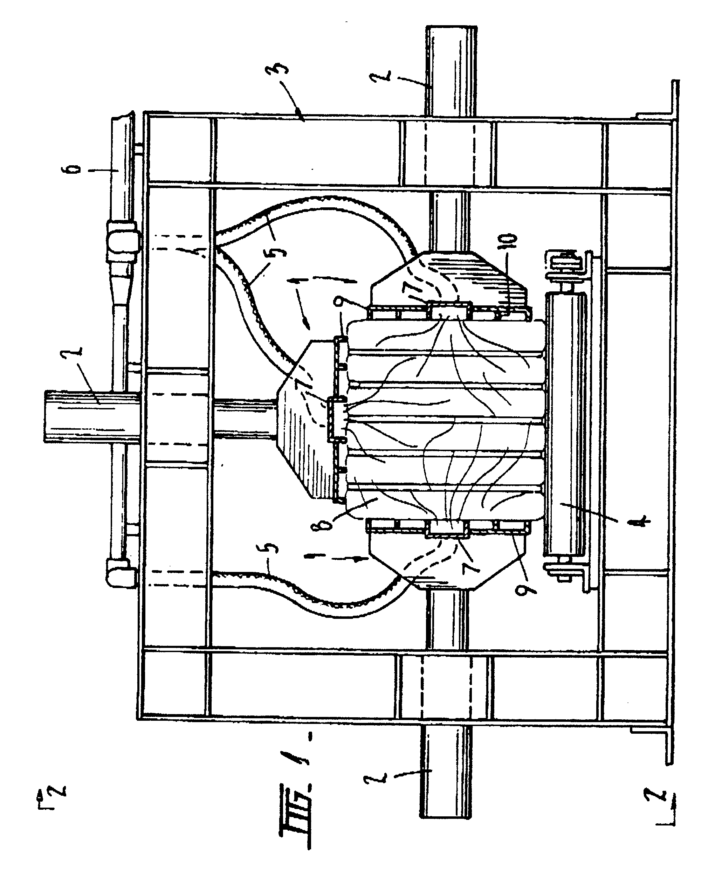

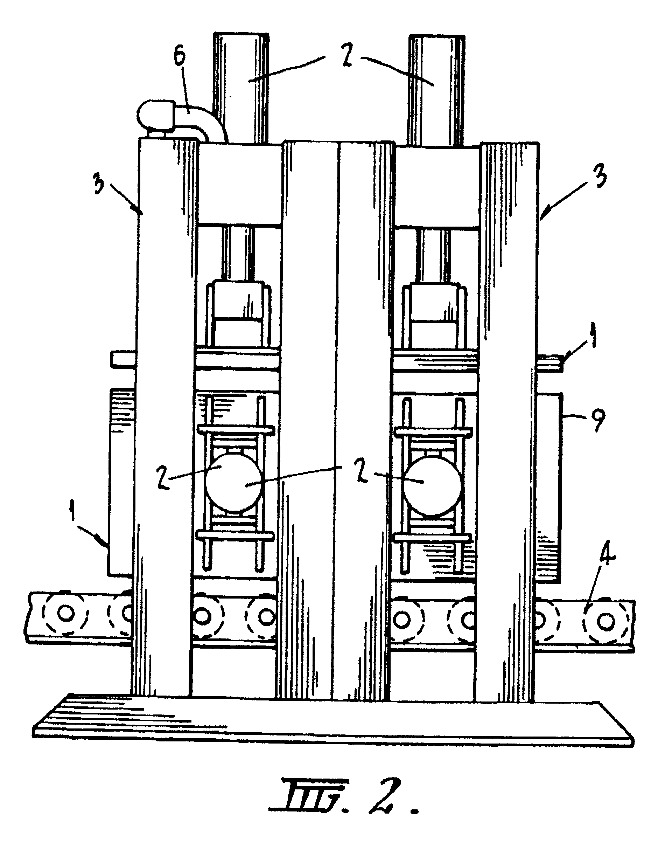

Referring firstly to Figs. 1 to 2 of the drawings, it will be noted that the apparatus of the present invention comprises three plenum pads 1 are supported by pairs of clamping cylinders 2 which are in turn supported by a support frame 3 which straddles a conveyor 4 upon which a dumped bale B is supported for treatment. As indicated above, a clamping force of the order of 25 to 35 tonnes is applied between the opposed plenum pads and between the upper plenum pad and the conveyor 4. Steam and air are delivered, in the manner described further below, to each plenum paid 1 via flexible tubing 5 attached to supply piping 6 supported by the frame 3.

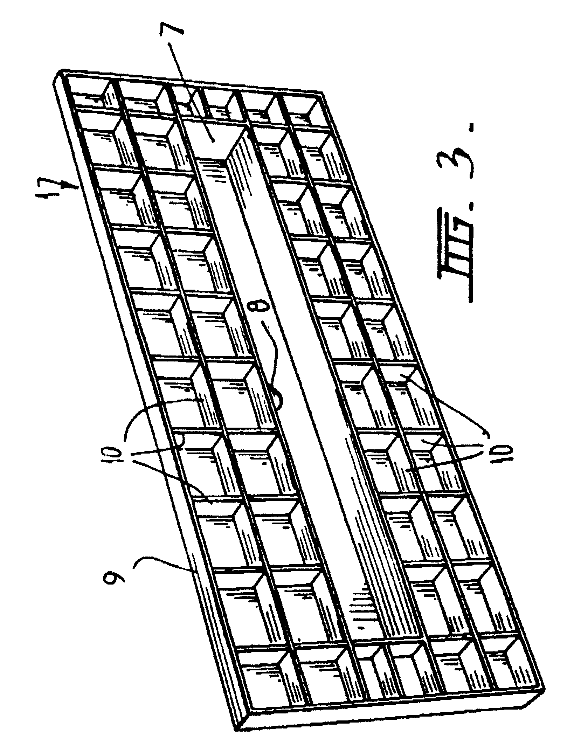

Referring now to Fig. 3 of the drawings, each plenum pad will be seen to comprise a central open ended channel 7 into which moisture laden heated air is delivered through an opening 8 via tubing 5. The channel 7 is surrounded by a frame 9 within which divider plates 10 form a honeycomb sealing structure. Although other methods of sealing the plenum pad may be adopted, it has been found that the honeycomb structure shown in Fig. 3 is both simple and effective.

To condition a bale, saturated dry steam (i.e. saturated steam with all free moisture removed) at a temperature of between 100°C and 110°C, and most preferably around 105°C to 109°C, is delivered to each plenum pad 1 at a regulated pressure of between 40 kPa to 55 kPa, and most preferably around 45 kPa, for a period of about 140 to 240 seconds, at most preferably around about 180 seconds. The time period selected is empirical and is dependent on the density of the material in the bale. The indicated time periods have been found to be satisfactory for bales of wool at densities of the order of 700kg/m³.

The selected pressure of the steam is controlled by a known pressure control valve (not shown) while the time period is controlled by means of a known prime logic control system (computer). It will be appreciated that the system may be controlled by mechanical or electrical timing means or manually.

Saturated compressed air (relative humidity approximately 90%-100%) is then delivered to the plenum pads 1 at a temperature of between 50°C and 65°C, and most preferably around 55°C, at a pressure of between 100kPa and 300kPa, most preferably around 200kPa, for a period of about 160 seconds to 220 seconds, and most preferably around 180 seconds. This treatment step reduces the intensity of the heat delivered to the bale by the steam and substantially uniformly distributes the heat built up in the bale throughout the bale. The saturated compressed air is preferably supplied by means of a liquid ring compressor (not shown), which is capable of supplying saturated compressed air at pressures up to 300kPa. Thus, heated saturated air is forced through bale at high pressure to evenly distribute the heat previously introduced into the bale by means of the steam. This substantially speeds up the conditioning process and avoids the problems associated with the introduction of high temperature steam over long periods.

The pressure of the compressed air is again controlled in a known manner and the timing is maintained by the control system referred to above, or in any other suitable manner.

To complete the conditioning process, the above steps are repeated to provide a total preferred conditioning time of the order of nine minutes.

Although the use of two plenum pads of the above type is preferred and have been found to achieve good results three or more plenum pads may be used to increase the uniformity of penetration of the baled material.

The apparatus shown in the accompanying drawings has been successfully tested with frozen dumped bales and with long term storage bales which were known from past experience to be difficult to open. In the case of frozen bales, it was found that a bale frozen to a temperature of 20C would be elevated to a temperature of 65°C in approximately nine minutes. Similarly, long term shortage bales conditioned for a similar period were found to be sufficiently conditioned to be easy to open.

## Claims

1. A method of conditioning baled materials comprising the step of forcing moisture laden heated air at pressures in the range of 100 to 300 kPa into the bale at temperatures in the range of 50 to 70°C for a period of time over a substantial part of the surface area of at least two sides of the bale to reduce the temperature of the steam in the bale and to uniformly distribute the heat built up in the bale throughout the bale, characterized in that before the step of forcing moisture laden heated air, dry steam is forced into the bale at a pressure of from 40 kPa to 55 kPa at a temperature of 80°C to 120°C for a period of time of 120 to 240 seconds, over a substantial part of the surface area of at least two sides of the bale so that said steam penetrates the material in the bale in a uniform manner, said steps of forcing dry steam and forcing moisture laden heated air being carried out for a total period of time of four to eight minutes.

2. The method of claim 1 characterized in that the two steps are repeated such that said first and second steps are performed for an initial period of approximately half of the total period defined and they are thereafter performed for a second period of time comprising the remainder of said total period.

3. The method of claim 1, characterized in that the temperature of said saturated dry steam lies between 100°C and 110°C.

4. The method of claim 1, characterized in that the temperature of said saturated dry steam lies between 105°C and 109°C at a regulated pressure of about 45 kPa for a period of about 180 seconds.

5. The method of claim 4, characterized in that said baled material is wool which has been compressed to a density of the order of 700 kg/m$^3$.

6. An apparatus for conditioning baled material comprising at least two plenum pads each dimension to cover a substantial part of the surface area of a side of a bale to be treated, means for clamping said pads in sealing contact with at least two opposite sides of the surface of said bale, means for controlling the introduction of steam/air in two discrete steps including means for forcing moisture laden heated air into the baled material under pressure in the range of 100 to 300 kPa at temperatures of 50 to 70°C over a substantial part of the surface area of at least two sides of the bale to uniformly distribute the heat built up in the bale throughout the bale characterized in that said controlling means comprises means for forcing dry steam into the bale at a pressure of 40 kPa to 55 kPa at a temperature of 80°C to 120°C for a period of 120 to 240 seconds so that said steam penetrates the material in the bale in a uniform manner.

7. The apparatus of claim 6, characterized in that said means for controlling the pressure and temperature of said saturated dry steam controls the temperature within the range 100°C and 110°C.

8. The apparatus of claim 7, characterized in that said means for controlling the pressure and temperature of said saturated dry steam maintains the pressure at a regulated pressure of about 45 kPa and maintains the temperature within the range 105°C to 109°C and said controlling means comprises a timing means, said timing means controlling the period of application of said saturated dry steam to the bale to a period of about 180 seconds.

## Revendications

1. Procédé de conditionnement de matières en balle, comprenant l'étape consistant à forcer de l'air chauffé et chargé d'humidité sous des pressions dans le domaine de 100 à 300 kPa au sein de la balle, à des températures dans le domaine de 50 à 70°C, pendant un certain laps de temps, sur une partie importante de l'aire de surface d'au moins deux côtés de la balle, afin de réduire la température de la vapeur régnant dans la balle et de répartir uniformément la chaleur qui s'est accumulée dans la balle, à travers l'ensemble de cette dernière, **caractérisé en ce que,** avant de passer à l'étape consistant à forcer de l'air chauffé et chargé d'humidité, on force de la vapeur sèche au sein de la balle sous une pression de 40 kPa à 55 kPa et à une température de 80°C à 120°C, pendant un laps de temps de 120 à 240 secondes, sur une partie importante de l'aire de surface d'au moins deux côtés de la balle, de telle sorte que ladite vapeur pénètre dans la matière présente dans la balle, d'une manière uniforme, lesdites étapes consistant à forcer de la vapeur sèche et à forcer de l'air chauffé et chargé d'humidité étant effectuées pendant un laps de temps total de 4 à 8 minutes.

2. Procédé selon la revendication 1, **caractérisé en ce qu'**on répète les deux étapes de telle sorte que lesdites première et seconde étapes sont réalisées pendant un laps de temps initial correspondant à approximativement la moitié du laps de temps total défini et sont ensuite effectuées pendant un second laps de temps comprenant le reste dudit laps de temps total.

3. Procédé selon la revendication 1, **caractérisé en ce que** la température de ladite vapeur sèche saturée se situe entre 100°C et 110°C.

4. Procédé selon la revendication 1, **caractérisé en ce que** la température de ladite vapeur sèche saturée se situe entre 105°C et 109°C sous une pression réglée d'environ 45 kPa, pendant un laps de temps d'environ 180 secondes.

5. Procédé selon la revendication 4, **caractérisé en ce que** ladite matière en balle est de la laine qui a été comprimée à une densité de l'ordre de 700 kg/m³.

6. Appareil pour le conditionnement de matières en balle, comprenant : au moins deux tampons d'air à surpression chacun étant dimensionné pour recouvrir une partie importante de l'aire de surface d'un côté d'une balle à traiter; des moyens destinés à serrer lesdits tampons en contact d'étanchement avec au moins deux côtés opposés de la surface de ladite balle; un moyen destiné à commander l'introduction de la vapeur/air au cours de deux étapes discrètes, englobant un moyen destiné à forcer de l'air chauffé et chargé d'humidité au sein de la matière en balle, sous une pression dans le domaine de 100 à 300 kPa, à des températures de 50 à 70°C, sur une partie importante de l'aire de surface d'au moins deux côtés de la balle, afin de répartir uniformément la chaleur qui s'est accumulée dans la balle, à travers l'ensemble de cette dernière, **caractérisé en ce que** ledit moyen de commande comprend un moyen destiné à forcer de la vapeur sèche au sein de la balle sous une pression de 40 kPa à 55 kPa, à une température de 80°C à 120°C pendant un laps de temps de 120 à 240 secondes, de telle sorte que ladite vapeur pénètre dans la matière présente dans la balle, d'une manière uniforme.

7. Appareil selon la revendication 6, **caractérisé en ce que** ledit moyen destiné à régler la pression et la température de ladite vapeur sèche saturée règle la température pour qu'elle se situe dans le domaine de 100°C à 110°C.

8. Appareil selon la revendication 7, **caractérisé en ce que** ledit moyen destiné à régler la pression et la température de ladite vapeur sèche saturée maintient la pression à une pression réglée d'environ 45 kPa et maintient la température au sein du domaine de 105°C à 109°C et ledit moyen de réglage comprend un moyen de minutage, ledit moyen de minutage réglant la période d'application de ladite vapeur sèche saturée à la balle pour que ce laps de temps représente un laps de temps d'environ 180 secondes.

**Patentansprüche**

1. Verfahren zum Konditionieren von in Ballen verpackten Materialien, beinhaltend den Schritt Pressen von feuchtigkeitshaltiger erwärmter Luft bei Drücken in dem Bereich von 100 bis 300 kPa in den Ballen bei Temperaturen in dem Bereich von 50 bis 70°C für eine Zeitspanne über einem wesentlichen Teil der Oberfläche von wenigstens zwei Seiten des Ballens, um die Temperatur des Dampfes in dem Ballen zu reduzieren und die in dem Ballen aufgebaute Wärme gleichmäßig in dem Ballen zu verteilen, dadurch gekennzeichnet, daß vor dem Schritt des Pressens von feuchtigkeitshaltiger erwärmter Luft trockener Dampf in den Ballen gepreßt wird bei einem Druck von 40 kPa bis 55 kpa bei einer Temperatur von 80°C bis 120°C für eine Zeitspanne von 120 bis 240 Sekunden über einem wesentlichen Teil der Oberfläche von wenigstens zwei Seiten des Ballens, so daß der Dampf das Material in dem Ballen auf gleichmäßige Weise durchdringt, wobei die Schritte des Pressens von trockenem Dampf und des Pressens von feuchtigkeitshaltiger erwärmter Luft für eine Gesamtzeitspanne von vier bis acht Minuten ausgeführt werden.

2. Verfahren nach Anspruch 1, dadurch gekennzeichnet, daß die beiden Schritte so wiederholt werden, daß der erste und zweite Schritt für eine Anfangszeitspanne von etwa der Hälfte der definierten Gesamtzeitspanne ausgeführt werden und anschließend für eine zweite Zeitspanne, welche den übrigen Teil der Gesamtzeitspanne ausmacht.

3. Verfahren nach Anspruch 1, dadurch gekennzeichnet, daß die Temperatur des gesättigten trockenen Dampfes zwischen 100°C und 110°C liegt.

4. Verfahren nach Anspruch 1, dadurch gekennzeichnet, daß die Temperatur des gesättigten trockenen Dampfes zwischen 105°C und 109°C liegt, bei einem geregelten Druck von etwa 45 kPa für eine Zeitspanne von etwa 180 Sekunden.

5. Verfahren nach Anspruch 4, dadurch gekennzeichnet, daß das in Ballen verpackte Material Wolle ist, die auf eine Dichte in der Größenordnung von 700 kg/m³ komprimiert worden ist.

6. Vorrichtung zum Konditionieren von in Ballen verpacktem Material, mit wenigstens zwei Verteilerblöcken, die jeweils so bemessen sind, daß sie einen wesentlichen Teil der Oberfläche einer Seite eines zu behandelnden Ballens bedecken, einer Einrichtung zum Festklemmen der Blöcke in Dichtkontakt mit wenigstens zwei entgegengesetzten Seiten der Oberfläche des Ballens, einer Einrichtung zum Steuern des Einleitens von Dampf/Luft in zwei diskreten Schritten, mit einer Einrichtung zum Pressen von feuchtigkeitshaltiger erwärmter Luft in das in Ballen verpackte Material unter einem Druck in dem Bereich von 100 bis 300 kPa bei Temperaturen von 50 bis 70°C über einem wesentlichen Teil der Oberfläche von wenigstens zwei Seiten des Ballens, um die in dem Ballen aufgebaute Wärme gleichmäßig in dem gesamten Ballen zu verteilen, dadurch gekennzeichnet, daß die Steuereinrichtung eine Einrichtung aufweist zum Pressen von trockenem Dampf in den Ballen bei einem Druck von 40 kPa bis 55 kPa und einer Temperatur von 80°C bis 120°C für eine Zeitspanne von von 120 bis 240 Sekunden, so daß der Dampf das Material in dem Ballen auf gleichmäßige Weise durchdringt.

7. Vorrichtung nach Anspruch 6, dadurch gekennzeichnet, daß die Einrichtung zum Steuern des Druckes und der Temperatur des gesättigten trockenen Dampfes die Temperatur in dem Bereich von 100°C und 110°C steuert.

8. Vorrichtung nach Anspruch 7, dadurch gekennzeichnet, daß die Einrichtung zum Steuern des Druckes und der Temperatur des gesättigten trockenen Dampfes den Druck auf einem geregeltem Druck von etwa 45 kPa und die Temperatur in dem Bereich von 105°C bis 109°C hält und daß die Steuereinrichtung eine Zeitsteuereinrichtung aufweist, welche die Zeitspanne der Beaufschlagung des Ballens mit dem gesättigten trockenen Dampf auf eine Zeitspanne von etwa 180 Sekunden einstellt.

FIG. 1

Fig. 2.

FIG. 3.